# EUROPEAN PATENT APPLICATION

(11) **EP 4 442 384 A1**
(43) Date of publication of application: **09.10.2024**
(21) Application number: 23752297.4
(22) Date of filing: 03.02.2023
(51) Int. Cl.: B21D 37/16, H01M 4/139, H01M 10/0525

(54) **PLATE MANUFACTURING APPARATUS AND PLATE MANUFACTURING METHOD**

(30) Priority: 12.02.2022 CN 202220283856 U
(71) Applicant: Contemporary Amperex Technology (Hong Kong) Limited, Central, Central And Western District (HK)
(72) Inventor: ZHENG, Yuantian, Ningde, Fujian 352100 (CN); WANG, Yong, Ningde, Fujian 352100 (CN); CHE, Huan, Ningde, Fujian 352100 (CN); LI, Shisong, Ningde, Fujian 352100 (CN)
(74) Representative: Gong, Jinping
(86) International application number: PCT/CN2023/074401
(87) International publication number: WO 2023/151517

(57) **Abstract**

Disclosed is an electrode plate manufacturing apparatus (100). The electrode plate manufacturing apparatus includes: a roller press mechanism (10) configured to roller press an electrode plate (200); and a freezing mechanism (20) disposed upstream of the roller press mechanism (10), the freezing mechanism being configured to freeze the electrode plate. Also disclosed is an electrode plate manufacturing method. An electrode plate is frozen before roller pressing. The water inside pores of the electrode plate forms fine ice crystals after freezing. These ice crystals prevent the pores in the electrode plate from being compacted and disappearing during roller pressing, thus obtaining an electrode plate with high porosity that is more easily and thoroughly infiltrated by electrolyte, improving the cycling performance of batteries.

## Description

### CROSS-REFERENCE TO RELATED APPLICATIONS

This application claims the priority of Chinese patent application No. "202220283856.4" filed by Contemporary Amperex Technology Co. Limited on February 12, 2022, which is incorporated herein by reference in its entirety.

### TECHNICAL FIELD

This application relates to the field of battery technologies and more specifically to an electrode plate manufacturing apparatus and an electrode plate manufacturing method.

### BACKGROUND

Lithium-ion batteries are widely used in the fields of vehicles, portable electric devices, mobile phones, spacecrafts, and others to provide electrical energy. With the widespread use of lithium-ion batteries, higher requirements have been posed on various aspects of their performance. For example, it is required that the batteries have good cycling performance, so as to meet the needs of rapid charging and be not prone to lithium precipitation during the charging process. However, it is difficult for electrode plates manufactured using current electrode plate manufacturing apparatuses to meet the needs for good cycling performance of batteries.

### SUMMARY

Embodiments of this application provide an electrode plate manufacturing apparatus, so as to improve the cycling performance of manufactured electrode plates to meet the needs for good cycling performance of batteries.

An embodiment of this application provides an electrode plate manufacturing apparatus including a roller press mechanism and a freezing mechanism; where the roller press mechanism is configured to roller press the electrode plate; and the freezing mechanism is disposed upstream of the roller press mechanism, and the freezing mechanism is configured to freeze the electrode plate.

In the above technical solution, the electrode plate is frozen before roller pressing. The water inside pores of the electrode plate forms fine ice crystals after freezing. These ice crystals prevent the pores in the electrode plate from being compacted and disappearing during roller pressing, thus obtaining an electrode plate with high porosity. Electrode plates with high porosity are more easily and thoroughly infiltrated by electrolyte, which is conducive to improving the cycling performance of batteries, thereby improving charging efficiency and reducing the risk of lithium precipitation.

In some embodiments of this application, the electrode plate manufacturing apparatus further includes a humidifying mechanism. The humidifying mechanism is disposed upstream of the freezing mechanism, and the humidifying mechanism is configured to increase humidity of the electrode plate.

In the above technical solution, with the humidifying mechanism disposed upstream of the freezing mechanism, the humidity of the electrode plate can be increased to improve the water content of the electrode plate, so after freezing, more fine ice crystals are formed in the electrode plate, thus obtaining an electrode plate with higher porosity.

In some embodiments of this application, the electrode plate manufacturing apparatus includes two humidifying mechanisms. The two humidifying mechanisms are disposed opposite each other to form a containment space for the electrode plate to pass through.

In the above technical solution, two humidifying mechanisms are disposed opposite each other to form a containment space for the electrode plate to pass through. This can be understood as humidifying mechanisms being disposed on two opposite sides of the electrode plate respectively, which can make the humidity of the electrode plate more balanced, make the pore distribution of the electrode plate more uniform, and also humidify both sides of the electrode plate, improving efficiency.

In some embodiments of this application, the freezing mechanism includes a freezing box. The freezing box is configured to contain the freezing medium, and the freezing medium is configured to freeze a portion of the electrode plate located inside the freezing box.

In the above technical solution, with the freezing box provided, the electrode plate is frozen inside the freezing box, so that the freezing medium is concentrated inside the freezing box, preventing the rapid evaporation of the freezing medium, which can fully utilize the freezing medium and reduce the amount of freezing medium used.

In some embodiments of this application, the freezing box is equipped with a medium outlet for discharge of the freezing medium contained inside the freezing box; and the freezing mechanism further includes a sprinkler component. The sprinkler component is disposed inside the freezing box, and the sprinkler component is configured to provide the freezing medium to the inside of the freezing box, and the sprinkler component is disposed downstream of the medium outlet.

In the above technical solution, the freezing medium enters the freezing box from the sprinkler component, freezes the electrode plate, and then exits the freezing box from the medium outlet. The sprinkler component is disposed downstream of the medium outlet, and when diffusing from the sprinkler component to the medium outlet, the freezing medium can pre-cool the unfrozen electrode plate to lower the temperature of the electrode plate, thus reducing the freezing time of the electrode plate, and improving the freezing efficiency.

In some embodiments of this application, the electrode plate manufacturing apparatus further includes a cooling mechanism. The cooling mechanism is configured to guide the freezing medium discharged from inside the freezing box through the medium outlet to the roller press mechanism to cool the roller press mechanism.

In the above technical solution, the cooling mechanism is configured to guide the freezing medium discharged from the medium outlet to the roller press mechanism. This can reduce the temperature of the roller press mechanism, preventing the condensation of water vapor on the roller surface due to temperature difference when the roller press mechanism comes into contact with the frozen electrode plate, which otherwise leads to sticking to the roller, and can also fully utilize the cooling effect of the freezing medium, reducing the amount of freezing medium used.

In some embodiments of this application, the roller press mechanism includes two press rollers. The two press rollers are disposed opposite each other to roller press the electrode plate passing between the two press rollers. The cooling mechanism includes two branch pipes. The two branch pipes are each connected to the medium outlet to guide the freezing medium discharged from inside the freezing box through the medium outlet to the two press rollers.

In the above technical solution, with two branch pipes disposed to cool the two press rollers of the roller press mechanism, there is no need for additional equipment to cool the roller press mechanism, simplifying the equipment structure, and reducing equipment costs. In addition, this can prevent the condensation of water vapor on the roller surface due to temperature difference when the upper and lower surfaces of the electrode plate contact the press rollers, which otherwise leads to sticking to the roller.

In some embodiments of this application, the cooling mechanism includes a first adjusting switch, where the first adjusting switch is disposed at the medium outlet, and the first adjusting switch is configured to adjust flow of the cooling medium discharged from the medium outlet; and/or the cooling mechanism further includes a second adjusting switch, where the second adjusting switch is disposed on the branch pipe, and the second adjusting switch is configured to adjust flow through the branch pipe.

In the above technical solution, the first adjusting switch is configured to adjust the flow of the cooling medium discharged from the medium outlet, thereby controlling the flow of the freezing medium guided to the roller press mechanism, to keep the temperature of the roller press mechanism within a reasonable range, thereby ensuring the roller pressing quality of the electrode plate. The second adjusting switch is configured to control the on and off of the branch pipe, making it convenient to control whether to guide the freezing medium to the roller press mechanism, facilitating flexible control of the temperature of the roller press mechanism.

In some embodiments of this application, the electrode plate manufacturing apparatus further includes multiple transmission rollers. The transmission rollers are configured to convey the electrode plate, and the multiple transmission rollers are disposed inside the freezing box and located upstream of the sprinkler component.

In the above technical solution, multiple transmission rollers are disposed inside the freezing box and located upstream of the sprinkler component. The electrode plate passing through multiple transmission rollers can increase the transmission path and time of the electrode plate inside the freezing box, thereby reducing the freezing time of the electrode plate and reducing the amount of cooling medium used.

In some embodiments of this application, the electrode plate manufacturing apparatus further includes a suction mechanism. The suction mechanism is disposed at the medium outlet, and the suction mechanism is configured to suck the freezing medium contained inside the freezing box, so that the freezing medium is discharged from the medium outlet.

In the above technical solution, the suction mechanism can increase the flow speed of the freezing medium from the sprinkler component to the medium outlet, improving the circulation efficiency of the freezing medium, beneficial to improving the freezing efficiency of the freezing medium on the electrode plate.

In some embodiments of this application, the electrode plate manufacturing apparatus further includes a cooling mechanism. The cooling mechanism is configured to cool the roller press mechanism.

In the above technical solution, the cooling mechanism is configured to cool the roller press mechanism, which can reduce the temperature of the roller press mechanism, preventing the condensation of water vapor on the roller surface due to temperature difference when the roller press mechanism comes into contact with the frozen electrode plate, which otherwise leads to sticking to the roller.

In some embodiments of this application, the electrode plate manufacturing apparatus further includes a drying mechanism. The drying mechanism is disposed downstream of the roller press mechanism, and the drying mechanism is configured to dry the electrode plate.

In the above technical solution, the drying mechanism is disposed downstream of the roller press mechanism, which can dry the electrode plate after roller pressing, fully evaporating the moisture of the electrode plate to form an electrode plate with high porosity.

This application proposes an electrode plate manufacturing method. The electrode plate manufacturing method includes: freezing an electrode plate; and roller pressing the frozen electrode plate.

In the above technical solution, the electrode plate is frozen before roller pressing. The water inside pores of the electrode plate forms fine ice crystals after freezing. These ice crystals prevent the pores in the electrode plate from being compacted and disappearing during roller pressing, thus obtaining an electrode plate with high porosity. Electrode plates with high porosity are more easily and thoroughly infiltrated by electrolyte, which is conducive to improving the cycling performance of batteries, thereby improving charging efficiency and reducing the risk of lithium precipitation.

In some embodiments of this application, before the freezing an electrode plate, the electrode plate manufacturing method further includes: supplying water to the electrode plate to increase humidity of the electrode plate.

In the above technical solution, the humidity of the electrode plate can be increased to improve the water content of the electrode plate, so after freezing, more fine ice crystals are formed in the electrode plate, thus obtaining an electrode plate with higher porosity.

In some embodiments of this application, the electrode plate manufacturing method further includes: cooling a roller press mechanism configured to roller press the electrode plate.

In the above technical solution, reducing the temperature of the roller press mechanism can prevent the condensation of water vapor on the roller surface due to temperature difference when the roller press mechanism comes into contact with the frozen electrode plate, which otherwise leads to sticking to the roller.

In some embodiments of this application, the electrode plate manufacturing method further includes: drying the electrode plate after roller pressing.

In the above technical solution, the electrode plate is dried after roller pressing to fully evaporate the moisture of the electrode plate, forming an electrode plate with high porosity.

### BRIEF DESCRIPTION OF DRAWINGS

In order to more clearly illustrate the technical solutions in the embodiments of this application, the accompanying drawings needed to be used in the embodiments are briefly introduced below. It should be understood that the following drawings only show some embodiments of this application, and therefore should not be considered as limiting the scope. For those of ordinary skill in the art, other related drawings can be obtained based on these drawings without creative efforts.
FIG. 1 is a schematic structural diagram of an electrode plate manufacturing apparatus provided by some embodiments of this application; and
FIG. 2 is a schematic structural diagram of an electrode plate manufacturing apparatus provided by some other embodiments of this application.

Reference signs: 100: electrode plate manufacturing apparatus; 10: roller press mechanism; 11: press roller; 20: freezing mechanism; 21: sprinkler component; 22: freezing box; 221: medium outlet; 30: humidifying mechanism; 40: cooling mechanism; 41: branch pipe; 42: first adjusting switch; 43: second adjusting switch; 44: main pipe; 441: discharge outlet; 50: transmission roller; 50a: first group of transmission rollers; 50b: second group of transmission rollers; 50c: third group of transmission rollers; 60: suction mechanism; 70: drying mechanism; 71: drying oven; 711: air inlet; 712: air outlet; 72: heating element; 73: supply fan; 74: exhaust fan; 75: first switch; 76: second switch; and 200: electrode plate.

### DESCRIPTION OF EMBODIMENTS

In order to make the objectives, technical solutions, and advantages of the embodiments of this application clearer, the technical solutions in the embodiments of this application are clearly and completely described below with reference to the accompanying drawings in the embodiments of this application. Apparently, the described embodiments are some rather than all of the embodiments of this application. Components in the embodiments of this application generally described and shown in the figures herein can be arranged and designed in a variety of different configurations.

Therefore, the detailed description of the embodiments of this application provided in the drawings is not intended to limit the scope of the claimed application, but merely represents selected embodiments of this application. Based on the embodiments in this application, all other embodiments obtained by those of ordinary skill in the art without making creative efforts fall within the scope of protection of this application.

It should be noted that, where possible, the embodiments of this application and the features of the embodiments can be combined with each other.

It should be noted that similar reference signs and letters indicate similar items in the following figures, and therefore, once an item is defined in one figure, this item does not need to be further defined and described in subsequent figures.

In the description of the embodiments of this application, it is necessary to explain that the indication of direction or positional relationship is based on the direction or positional relationship shown in the figures, or the usual positional relationship when the product of the application is used, or the direction or positional relationship commonly understood by those skilled in the art, which is only for the convenience of describing this application and simplifying the description, and does not indicate or imply that the device or element referred to must have a specific orientation or be constructed and operated in a specific orientation, and therefore, should not be construed as limiting this application. In addition, terms such as "first", "second", and "third" are only used for descriptive purposes and cannot be understood as indicating or implying relative importance.

Lithium batteries are widely used in the fields of aerospace, computers, mobile communication devices, robots, and electric vehicles due to their high energy density, long cycle life, and wide operating temperature range.

The battery cell includes an electrode assembly and an electrolyte, and the electrode assembly includes a positive electrode plate, a negative electrode plate, and a separator. The battery cell mainly works relying on the migration of metal ions between the positive and negative electrode plates. The positive electrode plate includes a positive electrode current collector and a positive electrode active substance layer, with the positive electrode active substance layer applied on the surface of the positive electrode current collector. A part of the positive electrode current collector not coated with the positive electrode active substance layer protrudes from a part of the positive electrode current collector coated with the positive electrode active substance layer and serves as a positive electrode tab. For example, in a lithium-ion battery, the material of the positive electrode current collector can be aluminum, and the positive electrode active substance can be lithium cobalt oxide, lithium iron phosphate, ternary lithium, lithium manganate, or the like. The negative electrode plate includes a negative electrode current collector and a negative electrode active substance layer, with the negative electrode active substance layer applied on the surface of the negative electrode current collector. A part of the negative electrode current collector not coated with the negative electrode active substance layer protrudes from a part of the negative electrode current collector coated with the negative electrode active substance layer and serves as a negative electrode tab. The material of the negative electrode current collector can be copper, and the negative electrode active substance can be carbon, silicon, or the like. To ensure that fusion does not occur in the event of a large current, multiple positive electrode tabs are provided and stacked together, and multiple negative electrode tabs are provided and stacked together. The material of the separator can be PP (polypropylene, polypropylene), PE (polyethylene, polyethylene), or the like. In addition, the electrode assembly can be a wound structure or a stacked structure, and the embodiments of this application are not limited to this.

The electrolyte is an ionic conductor that conducts between the positive and negative electrodes of the battery. During a charging and discharging process, the electrolyte transmits ions back and forth between the positive and negative electrodes. Whether the positive and negative electrode plates can be fully infiltrated by the electrolyte has a relatively large impact on the battery's charging and discharging performance (rate, high and low temperature), life (cycle, storage), and temperature range. The inventors have found that whether the electrode plate can be fully infiltrated is not only affected by the amount of electrolyte in the battery but also related to the porosity of the electrode plate. The higher the porosity of the electrode plate, the easier the electrode plate is to be infiltrated and the higher the wetting efficiency; the lower the porosity of the electrode plate, the more difficult the electrode plate is to be infiltrated and the lower the wetting efficiency.

To improve the wetting efficiency of an electrode plate, the inventors roller press and then freeze the electrode plate to prepare an electrode plate with a certain porosity.

However, the inventors have found that if the electrode plate is roller pressed and then frozen, the density of the active substance layer of the electrode plate will increase, which will reduce the number of fine ice crystals formed during the freezing stage, resulting in fewer pores formed and a lower porosity of the electrode plate.

Based on the above considerations, in order to alleviate the problem of low porosity of electrode plates manufactured by existing electrode plate manufacturing apparatuses, after in-depth research, the inventors have designed an electrode plate manufacturing apparatus. A freezing mechanism for freezing the electrode plate is disposed upstream of a roller press mechanism for roller pressing the electrode plate, so as to reserve more voids containing water in the electrode plate before roller pressing. After freezing, the water in the pores forms fine ice crystals, and after cold pressing, a drying mechanism is added before winding to evaporate the ice crystals in the electrode plate to obtain a high-porosity electrode plate.

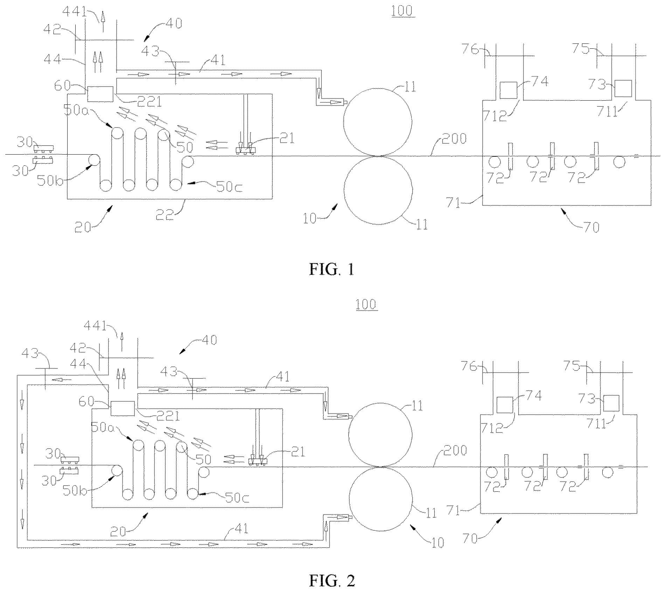

Refer to FIGs. 1 and 2. FIG. 1 is a schematic structural diagram of an electrode plate manufacturing apparatus 100 provided by some embodiments of this application. The electrode plate manufacturing apparatus 100 includes a roller press mechanism 10 and a freezing mechanism 20. The roller press mechanism 10 is configured to roller press the electrode plate 200. The freezing mechanism 20 is disposed upstream of the roller press mechanism 10, and the freezing mechanism 20 is configured to freeze the electrode plate 200.

It should be noted that in the embodiments of this application, "upstream" and "downstream" mentioned in the above and below texts refer to the order of production, with upstream indicating that the production is earlier and downstream indicating that the production is later, without limiting the spatial position between the components.

The freezing mechanism 20 being disposed upstream of the roller press mechanism 10 means the electrode plate 200 being first frozen by the freezing mechanism 20 and then transported to the roller press mechanism 10 for roller pressing. The freezing mechanism 20 needs to have the ability to condense water in the electrode plate 200 into ice crystals.

With the electrode plate 200 frozen before roller pressing, the water in pores of the electrode plate 200 forms fine ice crystals after freezing. These ice crystals prevent the pores in the electrode plate 200 from being compacted and disappearing during roller pressing, thus obtaining an electrode plate 200 with high porosity. Electrode plates with high porosity are more easily and thoroughly infiltrated by electrolyte, which is conducive to improving the cycling performance of batteries, thereby improving charging efficiency and reducing the risk of lithium precipitation.

In some embodiments, the electrode plate manufacturing apparatus 100 further includes a humidifying mechanism 30. The humidifying mechanism 30 is disposed upstream of the freezing mechanism 20, and the humidifying mechanism 30 is configured to increase humidity of the electrode plate 200.

The humidifying mechanism 30 is configured to supply water to the electrode plate 200. The humidifying mechanism 30 being disposed upstream of the freezing mechanism 20 means the electrode plate 200 being first hydrated by the humidifying mechanism 30 and then frozen by the freezing mechanism 20. The humidifying mechanism 30 can be a sprinkling mechanism, a spraying mechanism, or the like, and this application does not limit this.

With the humidifying mechanism 30 disposed upstream of the freezing mechanism 20, the humidity of the electrode plate 200 can be increased so that the water content in the electrode plate 200 can be higher. As a result, more pores contain water, and after freezing, more fine ice crystals are formed in the electrode plate 200, thus obtaining an electrode plate 200 with higher porosity.

In some embodiments, the electrode plate manufacturing apparatus 100 includes two humidifying mechanisms 30. The two humidifying mechanisms 30 are disposed opposite each other to form a containment space for the electrode plate 200 to pass through.

With the two humidifying mechanisms 30 forming a containment space for the electrode plate 200 to pass through, when the electrode plate 200 passes through the containment space, the two humidifying mechanisms 30 are located on opposite sides of the electrode plate 200. The two humidifying mechanisms 30 can be located on two thickness direction sides of the electrode plate 200 or on two width direction sides of the electrode plate 200.

Certainly, the electrode plate manufacturing apparatus 100 may alternatively include only one humidifying mechanism 30.

The two humidifying mechanisms 30 being disposed opposite each other to form a containment space for the electrode plate 200 to pass through can be understood as the humidifying mechanisms 30 being disposed on two opposite sides of the electrode plate 200 respectively, which can make the humidity of the electrode plate 200 more balanced, make the pore distribution of the electrode plate 200 more uniform, and also improve the humidifying efficiency.

In some embodiments, the freezing mechanism 20 includes a freezing box 22. The freezing box 22 is configured to contain the freezing medium, and the freezing medium is configured to freeze a portion of the electrode plate 200 located inside the freezing box 22.

The freezing medium can be a low boiling point liquid, which vaporizes at low temperatures (freezing temperatures) to absorb heat, that is, to produce freezing. The freezing medium can be liquid nitrogen, liquid carbon dioxide, and other substances that are harmless to operators and the atmosphere.

The freezing box 22 being configured to contain the freezing medium can be understood as the freezing medium entering the freezing box 22 and then freezing, inside the freezing box 22, the portion of the electrode plate 200 located inside the freezing box 22. The electrode plate 200 can be located entirely inside the freezing box 22 or partially inside the freezing box 22.

Certainly, in other embodiments, the freezing mechanism 20 may alternatively not be provided with a freezing box 22.

The electrode plate manufacturing apparatus 100 is provided with a freezing box 22, so that the electrode plate 200 is frozen inside the freezing box 22, making the freezing medium concentrated inside the freezing box 22, preventing the rapid evaporation of the freezing medium, which can fully utilize the freezing medium and reduce the amount of freezing medium used.

In some embodiments, the freezing box 22 is equipped with a medium outlet 221 for discharge of the freezing medium contained inside the freezing box 22; and the freezing mechanism 20 further includes a sprinkler component 21. The sprinkler component 21 is disposed inside the freezing box 22, the sprinkler component 21 is configured to provide the freezing medium to the inside of the freezing box 22, and the sprinkler component 21 is disposed downstream of the medium outlet 221.

As shown in FIG. 1, the sprinkler component 21 is disposed facing the electrode plate 200, and a spray nozzle of the sprinkler component 21 faces the electrode plate 200. The sprinkler component 21 is located above the electrode plate 200 to be able to spray the freezing medium from top to bottom onto the electrode plate 200. Certainly, the sprinkler component 21 can alternatively be located below the electrode plate 200, thus spraying the freezing medium from bottom to top onto the electrode plate 200. The number of sprinkler components 21 can be one or more, with more referring to two or more. For example, according to actual needs, the freezing mechanism 20 can include two sprinkler components 21, with the two sprinkler components 21 disposed opposite each other, defining a space for the electrode plate 200 to pass through between the two sprinkler components 21. The two sprinkler components 21 are located on opposite sides of the electrode plate 200 respectively, to be able to spray the freezing medium onto the electrode plate 200 from opposite sides. The direction of the hollow arrows in FIG. 1 indicates the flow direction of the cooling medium.

The medium outlet 221 is disposed upstream of the sprinkler component 21, and after the freezing medium is sprayed onto the electrode plate 200 by the sprinkler component 21, it vaporizes after absorbing the heat of the electrode plate 200 and is discharged from the medium outlet 221. As the vaporized freezing medium flows from the sprinkler component 21 to the medium outlet 221, it can pre-cool the electrode plate 200 between the sprinkler component 21 and the medium outlet 221.

The freezing medium enters the freezing box 22 from the sprinkler component 21, freezes the electrode plate 200, and then exits the freezing box 22 from the medium outlet 221. The sprinkler component 21 is disposed downstream of the medium outlet 221, and when diffusing from the sprinkler component 21 to the medium outlet 221, the freezing medium can pre-cool the unfrozen electrode plate 200 to lower the temperature of the electrode plate 200, thus reducing the freezing time of the electrode plate 200, and improving the freezing efficiency.

In some embodiments, the electrode plate manufacturing apparatus 100 further includes a cooling mechanism 40. The cooling mechanism 40 is configured to guide the freezing medium discharged from inside the freezing box 22 through the medium outlet 221 to the roller press mechanism 10 to cool the roller press mechanism 10.

The cooling mechanism 40 may be an apparatus including a structure such as pipe or blower. For example, the cooling mechanism 40 can guide the freezing medium discharged from the medium outlet 221 to the roller press mechanism 10 through a pipe. For another example, the cooling mechanism 40 can blow the freezing medium discharged from the medium outlet 221 to the roller press mechanism 10 using a blower.

The freezing medium discharged from the medium outlet 221 still has a certain cooling effect. The cooling mechanism 40 is configured to guide the freezing medium discharged from the medium outlet 221 to the roller press mechanism 10This can reduce the temperature of the roller press mechanism 10, preventing the condensation of water vapor on the roller surface due to temperature difference when the roller press mechanism 10 comes into contact with the frozen electrode plate 200, which otherwise leads to sticking to the roller, and can also fully utilize the cooling effect of the freezing medium, reducing the amount of freezing medium used.

In some embodiments, the roller press mechanism 10 includes two press rollers 11. The two press rollers 11 are disposed opposite each other to roller press the electrode plate 200 passing between the two press rollers 11. The cooling mechanism 40 includes two branch pipes 41. The two branch pipes 41 are each connected to the medium outlet 221 to guide the freezing medium discharged from inside the freezing box 22 through the medium outlet 221 to the two press rollers 11.

The cooling mechanism 40 may alternatively include only one branch pipe 41, and the freezing medium discharged from the medium outlet 221 is guided to the press roller 11 through the one branch pipe 41.

With two branch pipes 41 disposed to cool the two press rollers 11 of the roller press mechanism 10, there is no need for additional equipment to cool the roller press mechanism 10, simplifying the equipment structure, and reducing equipment costs. In addition, this can prevent the condensation of water vapor on the roller surface due to temperature difference when the upper and lower surfaces of the electrode plate 200 contact the press rollers 11, which otherwise leads to sticking to the roller.

In some embodiments, the cooling mechanism 40 includes a first adjusting switch 42, where the first adjusting switch 42 is disposed at the medium outlet 221, and the first adjusting switch 42 is configured to adjust flow of the cooling medium discharged from the medium outlet 221; and/or the cooling mechanism 40 further includes a second adjusting switch 43, where the second adjusting switch 43 is disposed on the branch pipe 41, and the second adjusting switch 43 is configured to adjust flow through the branch pipe 41.

It is possible to dispose only the first adjusting switch 42 at the medium outlet 221, or only the second adjusting switch 43 on the branch pipe 41, or both the first adjusting switch 42 at the medium outlet 221 and the second adjusting switch 43 on the branch pipe 41.

FIGs. 1 and 2 show the situation where the first adjusting switch 42 is disposed at the medium outlet 221 and the second adjusting switch 43 is disposed on the branch pipe 41. In the embodiments of the freezing mechanism 20 including two branch pipes 41, the two branch pipes 41 can each be provided with a second adjusting switch 43. The direction of the hollow arrows in FIG. 2 indicates the flow direction of the cooling medium. The freezing mechanism 20 further includes a main pipe 44. The main pipe 44 is connected to the medium outlet 221. The two branch pipes 41 are connected to the medium outlet 221 through the main pipe 44. The first adjusting switch 42 is disposed on the main pipe 44. The main pipe 44 also has a discharge outlet 441, and the first adjusting switch 42 can adjust the flow of the freezing medium discharged from the discharge outlet 441. Certainly, in some embodiments, the first adjusting switch 42 can alternatively be used to control the on and off of the main pipe 44, and the second adjusting switch 43 can alternatively be used to control the on and off of the branch pipe 41.

In the embodiments of the freezing mechanism 20 including one branch pipe 41, the branch pipe 41 can be connected to the medium outlet 221 through the main pipe 44, and the main pipe 44 also has a discharge outlet 441 connected to the medium outlet 221, with the first adjusting switch 42 disposed on the main pipe 44 to adjust the flow of the freezing medium discharged from the discharge outlet 441.

The first adjusting switch 42 can be a flow control valve. The second adjusting switch 43 can be a switch valve, such as a solenoid valve.

The first adjusting switch 42 is configured to adjust the flow of the cooling medium discharged from the medium outlet 221, thereby controlling the flow of the freezing medium guided to the roller press mechanism 10, to keep the temperature of the roller press mechanism 10 within a reasonable range, thereby ensuring the roller pressing quality of the electrode plate 200. The second adjusting switch 43 is configured to control the on and off of the branch pipe 41, making it convenient to control whether to guide the freezing medium to the roller press mechanism 10, facilitating flexible control of the temperature of the roller press mechanism 10.

In some embodiments, the electrode plate manufacturing apparatus 100 further includes multiple transmission rollers 50 for winding the electrode plate 200. The transmission rollers 50 are configured to convey the electrode plate 200, and the multiple transmission rollers 50 are disposed inside the freezing box 22 and located upstream of the sprinkler component 21.

Some or all of the multiple transmission rollers 50 are located downstream of the medium outlet 221.

The multiple transmission rollers 50 include a first group of transmission rollers 50a, a second group of transmission rollers 50b, and a third group of transmission rollers 50c, and along a predetermined direction, the first group of transmission rollers 50a are disposed between the second group of transmission rollers 50b and the third group of transmission rollers 50c. The electrode plate 200 is successively wound around each transmission roller 50 in each group of transmission rollers 50.

With the multiple transmission rollers 50 disposed inside the freezing box 22 and located upstream of the sprinkler component 21, the electrode plate 200 passing through the multiple transmission rollers 50 can increase the transmission path and time of the electrode plate 200 inside the freezing box 22, thereby reducing the freezing time of the electrode plate 200 and reducing the amount of cooling medium used.

As shown in FIGs. 1 and 2, in some embodiments, the electrode plate manufacturing apparatus 100 further includes a suction mechanism 60. The suction mechanism 60 is disposed at the medium outlet 221, and the suction mechanism 60 is configured to suck the freezing medium contained inside the freezing box 22, so that the freezing medium is discharged from the medium outlet 221.

The suction mechanism 60 can be disposed inside the freezing box 22 or outside the freezing box 22. FIGs. 1 and 2 show the situation where the suction mechanism 60 is disposed inside the freezing box 22, which can reduce the space occupied by the entire electrode plate manufacturing apparatus 100. The suction mechanism 60 can be a fan.

The suction mechanism 60 can increase the flow speed of the freezing medium from the sprinkler component 21 to the medium outlet 221, improving the circulation efficiency of the freezing medium, beneficial to improving the freezing efficiency of the freezing medium on the electrode plate 200.

In some embodiments, the electrode plate manufacturing apparatus 100 further includes a cooling mechanism 40. The cooling mechanism 40 is configured to cool the roller press mechanism 10.

The cooling mechanism 40 may not be configured to guide the freezing medium discharged from the medium outlet 221 to the roller press mechanism 10, but is an independent mechanism that can independently provide the freezing medium to the roller press mechanism 10 to reduce the temperature of the press roller 11.

The cooling mechanism 40 is configured to cool the roller press mechanism 10, which can reduce the temperature of the roller press mechanism 10, preventing the condensation of water vapor on the roller surface due to temperature difference when the roller press mechanism 10 comes into contact with the frozen electrode plate 200, which otherwise leads to sticking to the roller.

In some embodiments, the electrode plate manufacturing apparatus 100 further includes a drying mechanism 70. The drying mechanism 70 is disposed downstream of the roller press mechanism 10, and the drying mechanism 70 is configured to dry the electrode plate 200.

The drying mechanism 70 being disposed downstream of the roller press mechanism 10 means the electrode plate 200 being transported to the drying apparatus for drying after roller pressed by the roller press mechanism 10.

The drying mechanism 70 includes a drying oven 71, a heating element 72, a supply fan 73, and an exhaust fan 74. The drying oven 71 has an air inlet 711 and an air outlet 712. The heating element 72 is disposed inside the drying oven 71 and configured to heat a portion of the electrode plate 200 located inside the drying oven 71 to dry the electrode plate 200. The supply fan 73 is disposed at the air inlet 711 of the drying oven 71, and the supply fan 73 is configured to blow air into the drying oven 71. The exhaust fan 74 is disposed at the air outlet 712 of the drying oven 71, and the exhaust fan 74 is configured to discharge air inside the drying oven 71. The heating element 72 can be an infrared heating element 72, a resistance heating element 72, or the like.

The drying mechanism 70 further includes a first switch 75 for opening or closing the air inlet 711 and a second switch 76 for opening or closing the air outlet 712. The first switch 75 and the second switch 76 can be electromagnetic switches or the like.

The drying mechanism 70 is disposed downstream of the roller press mechanism 10, which can dry the electrode plate 200 after roller pressing, fully evaporating the moisture of the electrode plate 200 to form an electrode plate 200 with high porosity.

The embodiments of this application provide an electrode plate manufacturing apparatus 100. The electrode plate manufacturing apparatus 100 includes a roller press mechanism 10 configured to roller press the electrode plate 200, a freezing mechanism 20 configured to freeze the electrode plate 200, two humidifying mechanisms 30, a cooling mechanism 40, multiple transmission rollers 50, a suction mechanism 60, and a drying mechanism 70. The freezing mechanism 20 is disposed upstream of the roller press mechanism 10. The two humidifying mechanisms 30 are disposed opposite each other and both are located upstream of the freezing mechanism 20, and the humidifying mechanisms 30 are configured to increase humidity of the electrode plate 200. The drying mechanism 70 is disposed downstream of the roller press mechanism 10 and is configured to dry the electrode plate 200. Among them, the freezing mechanism 20 includes a freezing box 22 with a medium outlet 221 and a sprinkler component 21 disposed inside the freezing box 22, with the sprinkler component 21 disposed downstream of the medium outlet 221, and the sprinkler component 21 is configured to spray the freezing medium onto the electrode plate 200. The medium outlet 221 is configured for the discharge of the freezing medium contained inside the freezing box 22. The suction mechanism 60 is disposed inside the freezing box 22 and disposed at the medium outlet 221, and the suction mechanism 60 is configured to suck the freezing medium contained inside the freezing box 22, so that the freezing medium is discharged from the medium outlet 221. The two branch pipes 41 of the cooling mechanism 40 are connected to the medium outlet 221 through the main pipe 44, to guide the freezing medium discharged from the medium outlet 221 to the press rollers 11 of the roller press mechanism 10, to cool the press rollers 11.

With the freezing mechanism 20 disposed upstream of the roller press mechanism 10, when producing the electrode plate 200, the electrode plate 200 is first frozen and then roller pressed, which can reserve more voids containing water in the electrode plate 200 before roller pressing. After freezing, the water in the pores forms fine ice crystals, and after cold pressing, a drying mechanism 70 is added before winding to evaporate the ice crystals in the electrode plate 200 to obtain a high-porosity electrode plate 200.

This application proposes an electrode plate manufacturing method. The electrode plate manufacturing method includes the following steps:

S 1: Freeze an electrode plate.

S2: Roller press the frozen electrode plate.

The inventors have found that whether the electrode plate can be fully infiltrated is not only affected by the amount of electrolyte in the battery but also related to the porosity of the electrode plate. The higher the porosity of the electrode plate, the easier the electrode plate is to be infiltrated and the higher the wetting efficiency; and the lower the porosity of the electrode plate, the more difficult the electrode plate is to be infiltrated and the lower the wetting efficiency.

To improve the wetting efficiency of the electrode plate and alleviate the problem of low porosity of the electrode plates manufactured by the existing electrode plate manufacturing method, after in-depth research, the inventors have designed an electrode plate manufacturing method, where the electrode plate is frozen before roller pressing, able to reserve more voids containing water in the electrode plate before roller pressing.

Specifically, with the electrode plate frozen before roller pressing, the water in the pores of the electrode plate forms fine ice crystals after freezing. These ice crystals prevent pores in the electrode plate from being compacted and disappearing during roller pressing, thus obtaining an electrode plate with high porosity. Electrode plates with high porosity are more easily and thoroughly infiltrated by electrolyte, which is conducive to improving the cycling performance of batteries, thereby improving charging efficiency and reducing the risk of lithium precipitation.

The electrode plate manufacturing method according to the embodiments of this application can be carried out using the electrode plate manufacturing apparatus 100 according to the embodiments of this application. Specifically, the electrode plate manufacturing apparatus 100 includes a roller press mechanism 10 and a freezing mechanism 20; the roller press mechanism 10 is configured to roller press the electrode plate 200; and the freezing mechanism 20 is disposed upstream of the roller press mechanism 10, and the freezing mechanism 20 is configured to freeze the electrode plate 200.

In some embodiments of this application, before step S 1 of freezing an electrode plate, the electrode plate manufacturing method further includes the following step.

S3: Supply water to the electrode plate to increase humidity of the electrode plate.

For example, the electrode plate manufacturing apparatus 100 further includes a humidifying mechanism 30. The humidifying mechanism 30 is disposed upstream of the freezing mechanism 20, and the humidifying mechanism 30 is configured to increase humidity of the electrode plate 200. The humidifying mechanism 30 is configured to supply water to the electrode plate 200. The humidifying mechanism 30 being disposed upstream of the freezing mechanism 20 means the electrode plate 200 being first hydrated by the humidifying mechanism 30 and then frozen by the freezing mechanism 20. The humidifying mechanism 30 can be a sprinkling mechanism, a spraying mechanism, or the like, and this application does not limit this.

In the above technical solution, the humidity of the electrode plate can be increased to improve the water content of the electrode plate, so after freezing, more fine ice crystals are formed in the electrode plate, thus obtaining an electrode plate with higher porosity.

In some embodiments of this application, the electrode plate manufacturing method further includes: cooling a roller press mechanism configured to roller press the electrode plate.

For example, the electrode plate manufacturing apparatus 100 further includes a cooling mechanism 40. The cooling mechanism 40 is configured to guide the freezing medium discharged from inside the freezing box 22 through the medium outlet 221 to the roller press mechanism 10, to cool the roller press mechanism 10. The cooling mechanism 40 may be an apparatus including a structure such as pipe or blower.

For another example, in some embodiments, the electrode plate manufacturing apparatus 100 further includes a cooling mechanism 40. The cooling mechanism 40 is configured to cool the roller press mechanism 10. The cooling mechanism 40 may not be configured to guide the freezing medium discharged from the medium outlet 221 to the roller press mechanism 10, but is an independent mechanism that can independently provide the freezing medium to the roller press mechanism 10 to reduce the temperature of the press roller 11.

In the above technical solution, reducing the temperature of the roller press mechanism can prevent the condensation of water vapor on the roller surface due to temperature difference when the roller press mechanism comes into contact with the frozen electrode plate, which otherwise leads to sticking to the roller.

In some embodiments of this application, the electrode plate manufacturing method further includes the following step.

S4: Dry the electrode plate after roller pressing.

For example, the electrode plate manufacturing apparatus 100 further includes a drying mechanism 70. The drying mechanism 70 is disposed downstream of the roller press mechanism 10, and the drying mechanism 70 is configured to dry the electrode plate 200. The drying mechanism 70 being disposed downstream of the roller press mechanism 10 means the electrode plate 200 being transported to the drying apparatus for drying after roller pressed by the roller press mechanism 10.

In the above technical solution, the electrode plate is dried after roller pressing to fully evaporate the moisture of the electrode plate, forming an electrode plate with high porosity.

The above are only some preferred embodiments of this application and are not intended to limit this application. For those skilled in the art, this application can have various modifications and changes. Any modifications, equivalent replacements, and improvements made within the spirit and principles of this application shall be included in the protection scope of this application.

## Claims

1. An electrode plate manufacturing apparatus, comprising:
a roller press mechanism configured to roller press an electrode plate; and
a freezing mechanism disposed upstream of the roller press mechanism, wherein the freezing mechanism is configured to freeze the electrode plate.

2. The electrode plate manufacturing apparatus according to claim 1, wherein the electrode plate manufacturing apparatus further comprises a humidifying mechanism, wherein the humidifying mechanism is disposed upstream of the freezing mechanism, and the humidifying mechanism is configured to increase humidity of the electrode plate.

3. The electrode plate manufacturing apparatus according to claim 2, wherein the electrode plate manufacturing apparatus comprises two humidifying mechanisms, the two humidifying mechanisms being disposed opposite each other to form a containment space for the electrode plate to pass through.

4. The electrode plate manufacturing apparatus according to any one of claims 1 to 3, wherein the freezing mechanism comprises a freezing box, the freezing box being configured to contain a freezing medium, wherein the freezing medium is configured to freeze a portion of the electrode plate located inside the freezing box.

5. The electrode plate manufacturing apparatus according to claim 4, wherein the freezing box is equipped with a medium outlet for discharging the freezing medium contained in the freezing box; and
the freezing mechanism further comprises a sprinkler component, wherein the sprinkler component is disposed within the freezing box, the sprinkler component is configured to provide the freezing medium to the inside of the freezing box, and the sprinkler component is disposed downstream of the medium outlet.

6. The electrode plate manufacturing apparatus according to claim 5, wherein the electrode plate manufacturing apparatus further comprises a cooling mechanism, the cooling mechanism being configured to direct the freezing medium discharged from the freezing box through the medium outlet to the roller press mechanism to cool the roller press mechanism.

7. The electrode plate manufacturing apparatus according to claim 6, wherein the roller press mechanism comprises two press rollers, the two press rollers being disposed opposite each other to roller press the electrode plate passing between the two press rollers; and
the cooling mechanism comprises two branch pipes, each of the two branch pipes being connected to the medium outlet to guide the freezing medium discharged from the medium outlet to the two press rollers.

8. The electrode plate manufacturing apparatus according to claim 7, wherein the cooling mechanism comprises a first adjusting switch, wherein the first adjusting switch is disposed at the medium outlet, and the first adjusting switch is configured to adjust flow of the cooling medium discharged from the medium outlet; and/or
the cooling mechanism further comprises a second adjusting switch, wherein the second adjusting switch is disposed on the branch pipe, and the second adjusting switch is configured to adjust flow through the branch pipe.

9. The electrode plate manufacturing apparatus according to any one of claims 5 to 8, wherein the electrode plate manufacturing apparatus further comprises multiple transmission rollers for winding the electrode plate, wherein the transmission rollers are configured to convey the electrode plate, and the multiple transmission rollers are disposed inside the freezing box and located upstream of the sprinkler component.

10. The electrode plate manufacturing apparatus according to any one of claims 5 to 9, wherein the electrode plate manufacturing apparatus further comprises a suction mechanism, wherein the suction mechanism is disposed at the medium outlet, and the suction mechanism is configured to extract the freezing medium from within the freezing box, facilitating discharge of the freezing medium from the medium outlet.

11. The electrode plate manufacturing apparatus according to any one of claims 1 to 10, wherein the electrode plate manufacturing apparatus further comprises a cooling mechanism, the cooling mechanism being configured to cool the roller press mechanism.

12. The electrode plate manufacturing apparatus according to any one of claims 1 to 11, wherein the electrode plate manufacturing apparatus further comprises a drying mechanism, wherein the drying mechanism is disposed downstream of the roller press mechanism, and the drying mechanism is configured to dry the electrode plate.

13. An electrode plate manufacturing method, comprising:
freezing an electrode plate; and
roller pressing the frozen electrode plate.

14. The electrode plate manufacturing method according to claim 13, wherein before the freezing an electrode plate, the electrode plate manufacturing method further comprises:
supplying water to the electrode plate to increase humidity of the electrode plate.

15. The electrode plate manufacturing method according to claim 13, wherein the electrode plate manufacturing method further comprises:
cooling a roller press mechanism configured to roller press the electrode plate.

16. The electrode plate manufacturing method according to claim 13, wherein the electrode plate manufacturing method further comprises:
drying the electrode plate that is roller pressed.
